# EUROPEAN PATENT SPECIFICATION

(11) **EP 1 904 268 B1**
(45) Date of publication and mention of the grant of the patent: **27.05.2009**
(21) Application number: 05769299.8
(22) Date of filing: 22.06.2005
(51) Int. Cl.: B23Q 17/22, B23Q 3/18

(54) **A METHOD FOR MECHANICAL MACHINING, IN PARTICULAR FOR DRILLING AND TURNING LIGHT ALLOY WHEELS, AND A MECHANICAL MACHINING INSTALLATION OPERATING ACCORDING TO THIS METHOD**
VERFAHREN ZUR MASCHINELLEN BEARBEITUNG, INSBESONDERE ZUM BOHREN UND DREHEN VON LEICHTLEGIERUNGSRÄDERN, UND GEMÄSS DIESEM VERFAHREN BETRIEBENE ANLAGE ZUR MASCHINELLEN BEARBEITUNG
PROCÉDÉ D'USINAGE MÉCANIQUE, EN PARTICULIER POUR PERCER ET TOURNER DES ROUES EN ALLIAGE LÉGER, ET INSTALLATION D'USINAGE MÉCANIQUE FONCTIONNANT SELON LEDIT PROCÉDÉ

(43) Date of publication of application: 02.04.2008
(73) Proprietor: Maus S.p.A., 35011 Campodarsego (IT)
(72) Inventor: SAMMARTIN, Roberto, I-35030 Selvazzano Dentro (IT)
(74) Representative: Fabris, Stefano
(86) International application number: PCT/IT2005/000359
(87) International publication number: WO 2006/137088

(56) References cited:
- DE-A1- 4 407 550
- US-A- 4 782 567
- PATENT ABSTRACTS OF JAPAN vol. 1996, no. 12, 26 December 1996 (1996-12-26) -& JP 08 201053 A (MITSUBISHI ELECTRIC CORP), 9 August 1996 (1996-08-09)

## Description

### Technical field

The present invention relates to a method for mechanical machining of wheels, in particular for drilling and turning light alloy wheels, according to the preamble to the main claim (see for example US-A-4 782 567). The subject of the invention is also a machining installation operating according to the above-mentioned method.

### Technological background

The invention falls particularly, though not exclusively, within the specific technical field of mechanical machining operations provided for in the production of vehicle wheels of light alloy, in particular aluminium alloy. It should also be understood that the invention may be applied equally to mechanical machining of other types of wheels.

In this specific field, provision is made for the semi-finished wheel casting to undergo cycles of machining by removal of chips, mainly drilling and turning, the semi-finished part having first been appropriately centred and clamped on suitable workpiece fixtures.

Typically, the industrial field of mechanical machining for the production of light alloy wheels is characterized by high production volumes with fairly short cycle times for machining each individual wheel, placing it within the field of large-scale production requiring high productivity.

At the present day, moreover, in view of the evolution and globalization of markets, considerable flexibility in production is required so that the main purposes include that of providing production lines in which the parts (wheels) can be fed to machining centres in sequences which are almost random (as regards dimensions, type, geometry etc.), with devices capable of recognising and applying to each individual part fed to the line the most appropriate work cycle, at the same time optimizing machining and tooling times and costs and also responding promptly and effectively to the requirements and demands imposed by the market, with reference in particular to differences in the characteristics of the part and variations in production volume. A further requirement which arises at the same time as this objective of greater flexibility and speed of response imposed by the market is that of being able also to reset production cycles economically and rapidly and also effectively, in areas moreover where it is more complex to have skilled labour available capable of performing resetting operations on the production lines at this level.

Added to this there is also the further requirement at the present day of obtaining ever greater levels of accuracy in size and shape in the production of light alloy wheels, with the objective of reducing if not eliminating the need for subsequent corrective operations to balance the wheel, all of which also advantageously allows a drastic reduction in the use of materials traditionally employed in balancing operations, such as lead, well known for their toxicity and attendant disposal difficulties.

In relation to dimensional accuracy, it is also known that following the casting operations, semi-finished wheels are subject to dimensional distortion which in particular affects the planarity of the front flange of the wheel. This distortion effect is due mainly to the pressures applied by the handling devices of the foundry robots used to handle the rough wheel castings, which squeeze the part along diametral lines, ovalizing the front flange of the wheel and so possibly affecting its planarity. Where conventional systems of seating and centring the part in the machining centres are used, distortion of the above-mentioned type adversely affects positioning of the part, which has to be compensated for by laborious machining operations and frequently means that the degree of balancing selected beforehand to be achieved exclusively by means of machining only cannot be obtained, so that subsequent corrective balancing of the wheel is required.

### Description of the invention

The purpose of the invention is therefore to make available a method and an installation for mechanical machining, in particular for drilling and turning light alloy wheels, designed to meet the above-mentioned requirements, at the same time overcoming the limits encountered with reference to the known technology cited.

This purpose and also others which will become clear in what follows are achieved by the invention by means of a method and an installation for mechanical machining implemented according to the claims which follow.

### Brief description of the drawings

The characteristics and advantages of the invention will become clear from the following detailed description of a preferred example of embodiment illustrated purely by way of non-limiting example with reference to the appended drawings in which:
- figure 1 is a block diagram of the main steps in a method of machining according to the present invention,
- figure 2 is a schematic plan view of a device operating according to the method disclosed by the invention,
- figure 3 is a schematic view in side elevation of the device in figure 2 in a step in the method according to the invention,
- figure 4 is a partial schematic view at an enlarged scale of the wheel in figure 3 undergoing the method of machining disclosed by the invention,
- figure 5 is a further schematic view corresponding to that in figure 2 in a step in the method,
- figure 6 is a view in front elevation of the wheel in the preceding drawings in a further step in the method disclosed by the invention,
- figure 7 is a schematic view of an installation for mechanical machining operations operating according to the steps shown in figure 1,
- figure 8 is a view in side elevation of the wheel in figure 6,
- figure 9 is an enlarged view of a detail in figure 6,
- figure 10 is a partial view in side elevation of the wheel in the preceding drawings,
- figure 11 is an enlarged view of a detail in figure 10.

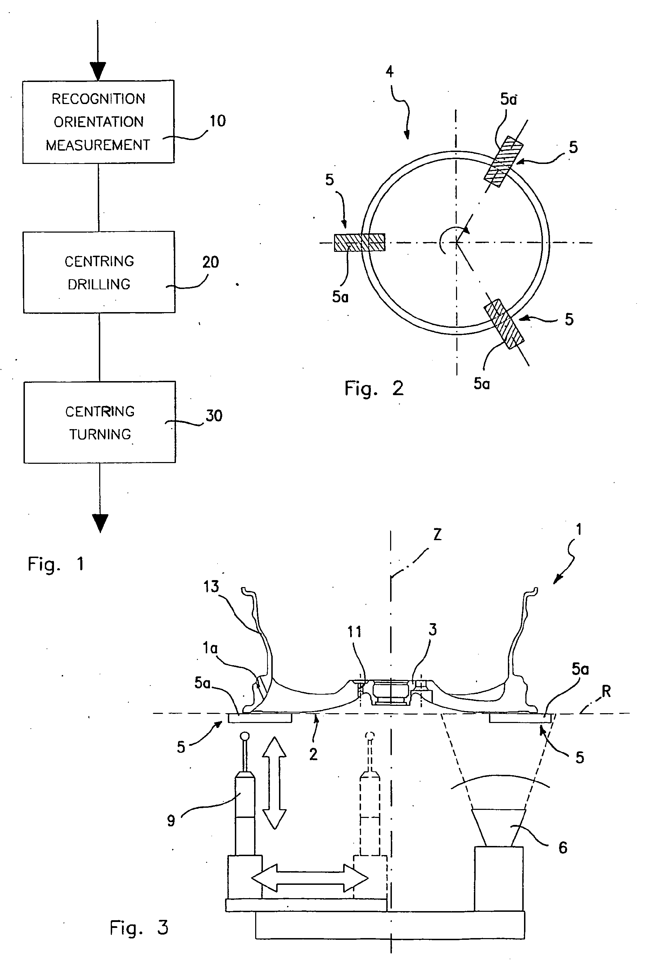

With reference firstly to figure 1, the block diagram shown represents the sequence of the main steps in a method for mechanical machining, particularly drilling and turning, of light alloy wheels carried out according to the present invention.

In what follows in the description, specific reference will be made to mechanical machining of a semi-finished wheel, indicated as a whole by the number 1 and shown schematically in the drawings, which, obtained by means of a casting process, is fed to the mechanical machining line on which the main machining operations of drilling, turning and surface finishing are carried out.

In a first step in the method, identified by the reference number 10, provision is made for the wheel 1 to undergo a process of recognition in which, through the use of detection means (for example vision means with a television camera or similar) or using feeler means, some principal characteristics of the wheel geometry such as for example the height and/or significant diameters are recognized and, in addition or alternatively, some parameters relating to the style or to the form of geometry obtained in the casting process. Once these characteristics are detected, they are compared by a processing unit with the parameters stored in an appropriate databank, into which the information relating to the corresponding machining and tooling times and cycles for each respective and specific type of wheel have previously been input. The result is that by means of the automatic recognition step, the batches of semi-finished wheels or single parts can be fed to the machining lines in substantially random sequences by reason of the fact that, once all the information is received, the machining centre can automatically prepare for machining a specific type of wheel, once the latter has been appropriately recognised. This makes the machining line particularly flexible, achieving high overall productivity rates.

This step also provides for initial orientation of the wheel 1 for subsequently production of the valve hole 1a, the position of which is correlated to the geometry of the wheel, in particular correlated to the form of the flange or front portion 2 of the wheel, which is extended radially from a central hub 3 (the position of the valve hole depending on the number and size of the spokes extending radially from the hub).

In the same step, provision is also made for the wheel 1 to undergo a first measurement of its actual position relative to a reference plane, indicated by R in the drawings, an operation which, as will appear clearly further on in the description, allows appropriate compensation to be made by means of subsequent mechanical machining for the planarity errors which characterize the front flange of the semi-finished wheel 1. These errors are due mainly to the distortion originating in the handling of the wheel at high temperature in the foundry by means of tongs or similar handling devices responsible for ovalizing the wheel.

Provision is made in particular for the use, in this viewing and recognition step, of a device 4 for seating the wheel comprising three seating areas 5 (having a limited circumferential extension) spaced apart angularly at a regular pitch, that is to say arranged at 120° from each other, forming respective surfaces 5a coplanar with each other and belonging to the common reference plane R.

These seating surfaces 5a have a radial extension such as to allow wheels 1 having different diameters which may vary within a preselected range to be seated on them, so as to offer particular flexibility in the feeding of wheels in batches or individual items of different diameters according to substantially random sequences.

The seating device 4 is moreover mounted on a table (not shown) rotatable about its main axis Z (perpendicular to the plane R) so as to allow orientation of the wheel 1 about this axis Z relative to the reference plane R.

Specifically, the method provides for the wheel 1 to be brought initially into seating contact with its front flange 2 on the seating surfaces 5a of the device 4.

The number 6 indicates viewing means such as vision means with a television camera, arranged below the seating areas 5, by means of which, following a preliminary rotation of the turntable, the positioning of the valve hole 1a in the front flange 2 of the wheel is recognised and identified. This position may be measured angularly relative to the (known) position of the seatings 5.

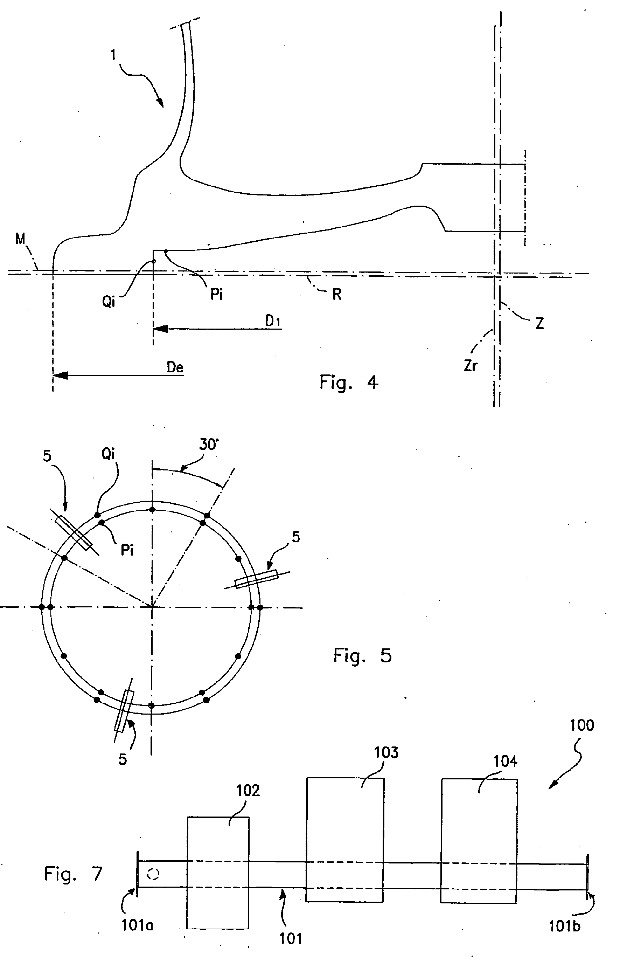

Next, the main axis of the wheel and its position relative to the reference system defined by the plane R and the axis Z are determined. These are determined by means of a process of measurement by interpolation, as explained more clearly in what follows. The method provides for the use of a first plurality of six points, indicated by Qi (i=1,..... 6), belonging to a common surface of the front flange 2 of the wheel and arranged circumferentially at a regular pitch (angular pitch of 60°) at a preselected radial distance from the axis Z. The coordinates of these points are determined with distance sensing means, for example a contact feeler 9, the movement of which is monitored relative to the above-mentioned reference system (plane R / axis Z). For each point Qi, the feeler 9 is moved in the corresponding radial direction, maintaining a preselected constant vertical distance measured along the axis Z, until there is contact with the flange 2 and the radial distance relative to the axis Z is measured for the contact point. This measurement is repeated for each of the six points Qi and then the position of the main axis of the wheel indicated by Zr, running parallel to the axis Z, is calculated by interpolation, as is its position relative to this central reference axis Z. For the interpolation calculation, an algorithm based on the following criterion may be used, for example. The six points Pi are divided into two separate groups comprising three points each in which the points of one group are made to alternate individually in sequence with the points of the other group. For the three points Qi of each group, the respective circumference passing through these is calculated by obtaining their corresponding centre of circumference. From the calculation of the mean of the coordinates of the two centres, the point of the position of the main axis of the wheel is obtained. It should also be understood that a different number of points Qi, and where appropriate other interpolation criteria may be used in the procedure of measurement and subsequent interpolation, this choice depending on the degree of accuracy and reliability of the calculation which it is intended to achieve. As the distance sensing means, position detecting means employing laser technology may be used as an alternative to the contact feeler 9. Once the position of the main axis Zr is identified and known from the above-mentioned calculation procedure, a median plane M obtained by interpolation of a second plurality of twelve points Pi (i=1,....12) is identified, the position of this being located by the feeler 9 as explained in what follows. In this case too a different number of points may be selected. Said points Pi are advantageously selected belonging to a common front flange surface and are arranged circumferentially at a regular pitch (angular pitch of 30°) at a preselected radial distance from the axis Zr. The points Pi and the points Qi may advantageously be chosen to be arranged in such a way that each point Qi is aligned radially (in the same radial direction) with a corresponding point Pi, as shown in figure 5. With particular reference to figure 3, along each radial direction the feeler 9 is moved for a first radial distance of preselected length, starting from the main axis Zr in order then to be driven vertically, parallel to the axis Z, for a second distance, until it touches the front flange 2, identifying upon contact the corresponding point Pi for which the spatial coordinates, in particular the Z coordinate, are stored. This measurement is repeated for each of the twelve points Pi and then the median plane M between the points Pi is calculated by interpolation (by interpolating the Z coordinates measured at the points Pi). The relative position of this plane M with respect to the reference plane R is then stored. For the interpolation calculation, the least squares method or other suitable interpolation algorithms may be used as a criterion.

The data relating to the position of the axis Zr and of the plane M obtained from the interpolation procedure are thus stored in order then to be transferred to the (numerically controlled) centring and machining devices provided for in the subsequent steps of drilling and turning the wheel.

It should be noted that by means of the measurement of the wheel carried out in the recognition step 10 it is possible to allow orientated repositioning of the wheel in the subsequent machining steps in which this positioning is favourable to the machining to be carried out since it allows suitable compensation to obtain a wheel with a high degree of balance. In a following step 20 in the method, provision is made for the wheel 1 to undergo a mechanical machining operation of drilling in which holes 11 for securing the wheel to the vehicle are obtained in the wheel. The wheel 1 is positioned in the turning centre using the position of the axis Zr and of the plane M calculated previously, in particular by positioning the wheel with the plane M parallel to the reference plane of the turning centre and also centred with respect to the axis Zr.

In this step, provision is also made for machining, advantageously by milling, three fixture contact surfaces 12 located at the wheel diameter D1 close to the maximum outside diameter De of the wheel (and arranged at 120° from each other). In particular, each of the three surfaces 12 has a surface portion 12a for seating the wheel 1 in the work holding devices in subsequent machining operations and a surface portion 12b intended to be in contact with the centring means. Preferably the portions 12a, 12b extend at right angles with respect to each other. The machining is such that the surface portions 12a on the wheel are obtained by removing material until a vertical coordinate Z is obtained parallel to the median plane M determined previously.

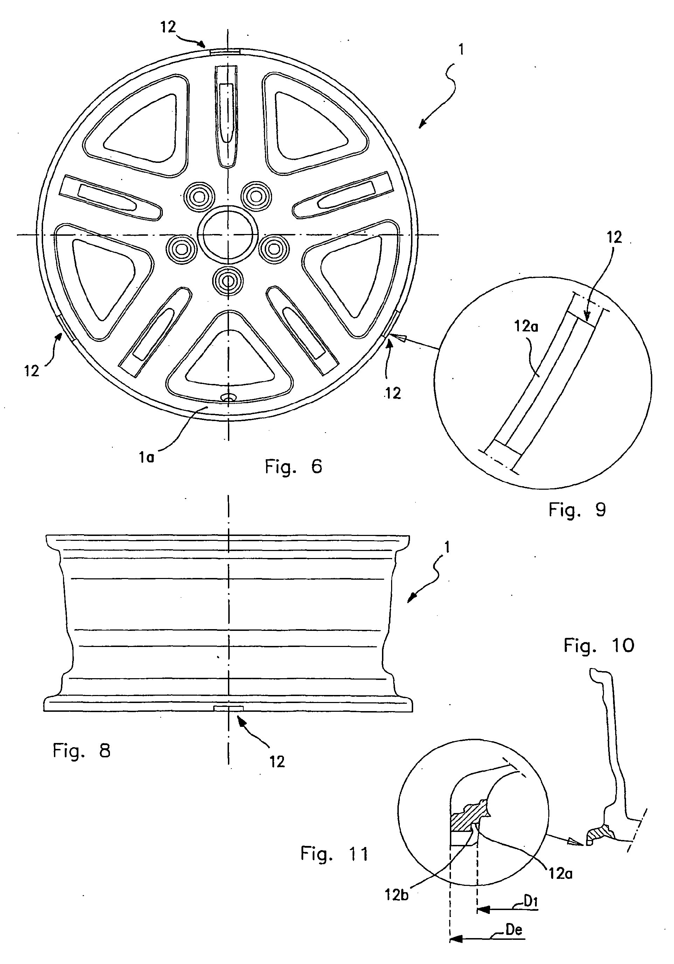

Since these surfaces 12 are machined at the same time as the drilling, they are characterized by high dimensional accuracy correlated to the accuracy of the centring achieved for drilling. Moreover, because of the centring carried out using the orientation of the wheel 1 measured in step 10, the machined surfaces 12 extend parallel to the median plane M of the wheel and their subsequent use as seating areas for the wheel on the work holding devices in subsequent machining steps and also as radial fixture contact points for the centring means (the portions 12b centred relative to the axis Zr) allows turning to be carried out parallel to the unmachined flange, obtaining more accurate balancing of the wheel. The milling of the above-mentioned surfaces 12 is carried out at the three above-mentioned points, 120° from each other, one of these points being preferably at an angular distance from the position of the valve hole, as shown in figure 6. In a further step 30 in the method, provision is made for turning to be carried out on the wheel 1, in particular turning of the cylindrical wall 13 arranged for mating the wheel with the tyre. In this step, provision is made for the centring means of the machining centre to be brought into contact with the fixture contact surfaces 12 so as to ensure higher centring accuracy and consequently appreciably less imbalance of the wheel. It should be understood that the machining steps 20 and 30, respectively drilling and turning, may be arranged in reverse order relative to that described above.

With reference to figure 7, the number 100 indicates as a whole an installation, shown schematically only, for mechanical machining operating according to the method disclosed by the invention, described previously. The installation 100 comprises a line 101 for transporting and conveying the semi-finished wheels 1 which extends between an entry station 101a and an exit station 101b.

Along from the station 101a, the installation comprises a work area 102 arranged where applicable for recognition of the wheel and also for measuring the orientation of the wheel, according to step 10 of the method of machining mentioned above.

The number 103 indicates a machining centre for drilling in which the wheels 1 undergo the step 20 of drilling with milling of the fixture contact surfaces 12. Further on from the drilling centre 103 a machining centre 104 for turning is provided to which the wheels 1 are conveyed for the corresponding step 30 of turning to be executed, at the end of which they are removed to the exit station 101b.

The invention thus achieves the aims proposed, offering the advantage indicated compared with known solutions.

A principal advantage lies in the fact of providing, separately from the mechanical machining operations, a step of measuring the actual position of the part in the machine to take account of the actual distortion of the part so that the correct compensation can be applied by optimising the removal of material and achieving improved wheel balancing.

Another advantage lies in the remarkable flexibility which can be obtained with the method according to the invention because of the fact that the semi-finished wheels can be fed to the mechanical machining line in random sequences, independently of the type of wheel and the size of the batch of parts fed in.

Another advantage lies in the fact that, because of the improved centring accuracy obtained with the method disclosed by the invention, particularly small amounts of wheel imbalance are obtained in the wheel following the machining operations, with a consequent appreciable reduction in the need for subsequent wheel balancing operations.

## Claims

1. A method for mechanical machining of wheels, in particular for drilling and turning light alloy wheels (1), **characterized in that** it comprises prior to the step of machining a step (10) for orientating and measuring the wheel (1) including the steps of:
- arranging a device (4) for seating the wheel with at least three seating areas (5) spaced apart from each other angularly at a regular angular pitch and forming respective seating surfaces coplanar with each other and belonging to a common reference plane (R), a wheel (1) being brought into seating contact on said surfaces with a portion of its front flange (2), said wheel being approximately coaxial with a central reference axis (2) of the device perpendicular to said reference plane (R),
- determining with distance sensing means (9) the radial coordinates of a first plurality of points (Qi) on a common surface of said flange (2), the points of said plurality being identified by moving said sensing means (9) radially relative to the central reference axis (Z) along respective directions radial to said axis at a constant distance measured parallel to said axis until said flange is intercepted, and calculating by interpolation of the radial coordinates of said first plurality of points (Qi) the position of a main wheel axis (Zr) running parallel to said reference axis (Z),
- determining with said sensing means (9) the coordinates of a second plurality of points (Pi) belonging to a common surface of said flange facing said seating area (5), relative to said reference plane (R), and calculating by interpolation a median plane (M) between the points of said second plurality (Pi), each of the points of said second plurality being located by the sensing means (9) by moving the latter along a first radial direction, starting from said main wheel axis (Zr) to a predefined radial distance, and in further continuation of said distance along a second direction perpendicular to said radial direction and until said common flange surface is intercepted,
- storing the position coordinates of said second plurality of points (Pi) relative to said reference plane (R) and said median plane (M) to allow orientated repositioning of the wheel (1) in the subsequent machining steps in order to obtain, at least at said second plurality of points (Pi), machined surface areas of flange belonging to or arranged parallel to said median plane (M), so as to compensate for errors of planarity in the wheel flange (1).

2. A method according to claim 1, in which the points of said first plurality (Qi) are chosen at a constant angular pitch from each other along the respective radial directions belonging to them.

3. A method according to claim 1 or 2, in which said first plurality comprises at least six measurement points (Qi) which can be detected by said sensing means (9).

4. A method according to any one of the preceding claims, in which the points of said second plurality (Pi) are located on the front flange surface (2) of the wheel in positions spaced apart angularly at a regular pitch.

5. A method according to claim 4, in which said second plurality of points comprises at least twelve measurement points (Pi) which can be detected by said sensing means (9).

6. A method according to any one of the preceding claims, in which each point of said first plurality (Qi) belongs to a respective plane radial to said main axis (Z) and passing through a corresponding point of said second plurality of points (Qi).

7. A method according to any one of the preceding claims, in which said at least three seating areas (5) in said device (4) have a radial extension such as to allow seating contact of flanges (2) of wheels with different outside diameters variable within a preselected range of values.

8. A method according to any one of the preceding claims, in which said seating device (4) rotates about the central reference axis (Z) so as to allow the wheel supported on said seating areas (5) to have a preselected angular orientation.

9. A method according to any one of the preceding claims, in which said step of orientation and measurement (10) precedes a step of drilling (20) to obtain holes in said wheel (1) for securing the wheel to the vehicle, surfaces (12) located at the outside diameter of the wheel being also obtained by milling in said drilling phase (20), each of said surfaces comprising a first surface portion (12a) extending parallel to said median plane (M) and a second portion (12b) centred radially relative to the main wheel axis (Zr), obtained from the measurement and calculation operations by interpolation of the orientation and measurement step (10).

10. A method according to claim 9, in which three fixture contact surfaces (12) are made, spaced angularly 120° apart from each other, the first and second surface portion (12a, 12b) of each of said surfaces (12) being extended at right angles relative to each other and constituting respective fixture contact points for the contact of centring means capable of centring the wheel (1) in a turning step (30) carried out following the drilling step (20).

11. A method according to claim 10, in which said located surfaces (12) are made in the wheel (1) in a position at a distance angularly from the position of the valve hole provided in the wheel.

12. An installation for mechanical machining of wheels, in particular for drilling and turning light alloy wheels, comprising means for orientating, measuring and machining operating according to a method of machining according to one of the preceding claims.

## Patentansprüche

1. Verfahren zur mechanischen Bearbeitung von Rädern, insbesondere zum Bohren und Drehen von Leichtlegierungsrädern (1), **dadurch gekennzeichnet, dass** es vor dem Schritt der maschinellen Bearbeitung einen Schritt (10) zur Ausrichtung und zum Ausmessen des Rades (1) umfasst, der die Schritte umfasst:
- Aufbauen einer Vorrichtung (4) zum Auflegen des Rades mit mindestens drei Auflagegebieten (5), die winkelmäßig mit einer gleichmäßigen Winkelteilung mit Abstand zueinander angeordnet sind und die miteinander in derselben Ebene befindliche jeweilige Auflageflächen bilden und die zu einer gemeinsamen Bezugsebene (R) gehören, wobei ein Rad (1) auf den Flächen mit einem Bereich seines vorderseitigen Flansches (2) in auffliegenden Kontakt gebracht wird, wobei das Rad ungefähr koaxial mit einer Mittenbezugsachse (Z) der Vorrichtung ausgerichtet ist, die senkrecht zu der Bezugsebene (R) ist,
- Bestimmen der radialen Koordinaten einer ersten Mehrzahl von Punkten (Qi) auf einer gemeinsamen Fläche des Flansches (2) mit einem Abstandssensormittel (9), wobei die Punkte der Mehrzahl **dadurch** ermittelt werden, dass das Sensormittel (9) bezüglich der Mittenbezugsachse (Z) radial entlang der zu der Achse radialen, jeweiligen Richtungen bei einem parallel zu der Achse gemessen konstanten Abstand bewegt wird, bis der Flansch berührt wird, und Berechnen der Position einer Hauptradachse (Zr), die sich parallel zu der Bezugsachse (Z) erstreckt, durch Interpolation der radialen Koordinaten der ersten Mehrzahl von Punkten (Qi),
- Bestimmen der Koordinaten einer zweiten Mehrzahl von Punkten (Pi), die zu einer gemeinsamen Fläche des Flansches gehören, der dem Auflagegebiet (5) gegenüberliegt, mit dem Sensormittel (9) bezüglich der Bezugsebene (R), und Berechnen einer Medianebene (M) zwischen den Punkten der zweiten Mehrzahl (Pi) durch Interpolation, wobei jeder der Punkte der zweiten Mehrzahl durch das Sensormittel (9) ermittelt wird, indem das Letztere ausgehend von der Hauptradachse (Zr) entlang einer ersten radialen Richtung bis zu einem vorbestimmten radialen Abstand, und in einer weiteren Fortführung des Abstands entlang einer zu der radialen Richtung senkrechten zweiten Richtung, und bis die gemeinsame Flanschfläche berührt wird, bewegt wird.
- Speichern der Positionskoordinaten der zweiten Mehrzahl von Punkten (Pi) bezüglich der Referenzebene (R) und der Medianebene (M), um eine ausgerichtete Neupositionierung des Rades (1) in den folgenden Bearbeitungsschritten zu ermöglichen, um mindestens an der zweiten Mehrzahl von Punkten (Pi) bearbeitete Oberflächengebiete des Flansches zu erlangen, die zu der Medianebene (M) gehören oder parallel dazu angeordnet sind, um so Planitätsabweichungen in dem Radflansch auszugleichen.

2. Verfahren gemäß Anspruch 1, wobei die Punkte der ersten Mehrzahl (Qi) mit einer konstanten Winkelteilung zueinander in den jeweiligen ihnen zugehörigen radialen Richtungen ausgewählt werden.

3. Verfahren gemäß Anspruch 1 öder 2, wobei die ersten Mehrzahl mindestens sechs Messpunkte (Qi) umfasst, die durch das Sensormittel (9) erfasst werden können.

4. Verfahren gemäß einem der vorhergehenden Ansprüche, wobei die Punkte der zweiten Mehrzahl (Pi) auf der vorderseitigen Flanschfläche (2) des Rades an Positionen angeordnet sind, die winkelmäßig mit einer gleichmäßigen Teilung zueinander angeordnet sind.

5. Verfahren gemäß Anspruch 4, wobei die zweite Mehrzahl von Punkten mindestens 12 Messpunkte (Pi) umfasst, die durch das Sensormittel (9) erfasst werden können.

6. Verfahren gemäß einem der vorhergehenden Ansprüche, wobei jeder Punkt der ersten Mehrzahl (Qi) zu einer jeweiligen Ebene gehört, die radial zu der Hauptachse (Z) angeordnet ist und durch einen korrespondierenden Punkt der zweiten Mehrzahl von Punkten (Qi) hindurch geht.

7. Verfahren gemäß einem der vorhergehenden Ansprüche, wobei die mindestens drei Auflagegebiete (5) in der Vorrichtung (4) eine derartige radiale Erweiterung aufweisen, dass ein Auflagekontakt der Flansche (2) von Rädern mit unterschiedlichen Außendurchmessern sich innerhalb eines vorab gewählten Wertebereichs verändern kann.

8. Verfahren gemäß einem der vorhergehenden Ansprüche, wobei die Auflagevorrichtung (4) um die Mittenbezugsachse (Z) rotiert, so dass das auf den Auflagegebieten (5) abgestützte Rad eine vorab gewählte Winkelausrichtung aufweisen kann.

9. Verfahren gemäß einem der vorhergehenden Ansprüche, wobei der Schritt der Ausrichtung und der Messung (10) einem Bohr-Schritt (20) vorausgeht, um in dem Rad (1) Löcher zu erlangen, um das Rad an dem Fahrzeug zu befestigen, wobei in der Bohrphase (20) auch auf dem Außendurchmesser des Rades angeordnete Flächen (12) durch Fräsen erlangt werden, wobei jede der Flächen einen ersten Flächenbereich (12a), der sich parallel zu der Medianebene (M) erstreckt, und einen zweiten Bereich (12b) umfasst, der bezüglich der Hauptradachse (Zr) radial zentriert ist, die aus der Messung und den Berechnungsvorgängen durch Interpolation des Ausrichtungs- und Messschrittes (10) erlangt wird.

10. Verfahren gemäß Anspruch 9, wobei die drei Befestigungskontaktflächen (12) winkelmäßig mit einem Abstand von 120° zueinander angeordnet hergestellt werden, wobei der erste und der zweite Flächenbereich (12a, 12b) jeder der Flächen (12) sich relativ zueinander in rechten Winkeln erstrecken und die jeweiligen Befestigungskontaktpunkte für den Kontakt mit dem Zentriermittel bilden, das das Rad (1) in einem Dreh-Schritt (30) zentrieren kann, der auf den Bohr-Schritt (20) folgend ausgeführt wird.

11. Verfahren gemäß Anspruch 10, wobei die ermittelten Flächen (12) in dem Rad (1) an einer Position mit einem Winkelabstand von der Position des in dem Rad vorgesehenen Ventilloches hergestellt werden.

12. Einrichtung zur mechanischen Bearbeitung von Rädern, insbesondere zum Bohren und Drehen von Leichtlegierungsrädern, die Mittel zur Ausrichtung, zum Messen und zur Bearbeitung aufweist, die gemäß einem Bearbeitungsverfahren gemäß einem der vorhergehenden Ansprüche arbeiten.

## Revendications

1. Procédé d'usinage mécanique de roues, en particulier pour percer et tourner des roues en alliage léger (1), **caractérisé en ce qu'**il comprend avant l'étape d'usinage une étape (10) pour orienter et mesurer la roue (1) comportant les étapes de:
- disposer un dispositif (4) pour porter la roue avec au moins trois surfaces de siège (5) espacées angulairement les unes des autres d'un pas angulaire régulier et formation des surfaces de siège respectives coplanaires les unes avec les autres et appartenant à un plan de référence commun (R), une roue (1) mise en contact pour le siège sur lesdites surfaces avec une portion de sa bride frontale (2), ladite roue étant approximativement coaxiale avec un axe de référence central (Z) du dispositif perpendiculaire audit plan de référence (R),
- déterminer avec un moyen de détection de distance (9) les coordonnées radiales d'une première pluralité de points (Qi) sur une surface commune de ladite bride (2), les points de ladite pluralité étant identifiés en déplaçant ledit moyen de détection (9) radialement par rapport à l'axe de référence central (Z) le long de directions respectives radiales audit axe à une distance constante mesurée parallèlement audit axe jusqu'à ce que ladite bride soit interceptée, et calculer par interpolation les coordonnées radiales de ladite première pluralité de points (Qi) la position d'un axe de roue principal (Zr) s'étendant parallèlement audit axe de référence (Z),
- déterminer avec ledit moyen de détection (9) les coordonnées d'une seconde pluralité de points (Pi) appartenant à une surface commune de ladite bride en vis-à-vis de ladite surface de siège (5), par rapport audit plan de référence (R), et calculer par interpolation un plan médian (M) entre les points de ladite seconde pluralité (Pi), chacun des points de ladite seconde pluralité étant localisé par le moyen de détection (9) en déplaçant ce dernier le long d'une première direction radiale, depuis ledit axe principal de roue (Zr) jusqu'à une distance radiale prédéfinie, et continuant à cette distance le long d'une seconde direction perpendiculaire à ladite direction radiale et jusqu'à ce que ladite surface commune de bride soit interceptée,
- stocker les coordonnées de position de ladite seconde pluralité de points (Pi) par rapport audit plan de référence (R) et audit plan médian (M) pour permettre le repositionnement orienté de la roue (1) dans les étapes d'usinage consécutives en vue d'obtenir, au moins au niveau de ladite seconde pluralité de points (Pi), des surfaces usinées de la bride appartenant ou étant disposées parallèlement audit plan médian (M), de manière à compenser des erreurs de planarité dans la bride de roue (1).

2. Procédé selon la revendication 1, dans lequel les points de ladite première pluralité (Qi) sont choisis à un pas angulaire constant les uns des autres le long de directions radiales respectives leur appartenant.

3. Procédé selon la revendication 1 ou 2, dans lequel ladite première pluralité comprend au moins six points de mesure (Qi) qui peuvent être détectés par ledit moyen de détection (9).

4. Procédé selon l'une quelconque des revendications précédentes, dans lequel les points de ladite seconde pluralité (Pi) sont situés sur la surface de bride frontale (2) de la roue dans des positions espacées angulairement d'un pas régulier.

5. Procédé selon la revendication 4, dans lequel ladite seconde pluralité de points comporte au moins douze points de mesure (Pi) qui peuvent être détectés par ledit moyen de détection (9).

6. Procédé selon l'une quelconque des revendications précédentes, dans laquelle chaque point de ladite première pluralité (Qi) appartient à un plan respectif radial audit axe principal (Z) et passant par un point correspondant de ladite seconde pluralité de points (Qi).

7. Procédé selon l'une quelconque des revendications précédentes, dans lequel lesdites au moins trois surfaces de siège (5) dans ledit dispositif (4) ont une extension radiale de manière à permettre le contact de siège de brides (2) de roues avec différents diamètres extérieurs variables dans une fourchette présélectionnée de valeurs.

8. Procédé selon l'une quelconque des revendications précédentes, dans laquelle ledit dispositif de support (4) tourne autour de l'axe central de référence (Z) de manière à permettre le siège de la roue sur lesdites surfaces de siège (5) pour avoir une orientation angulaire présélectionnée.

9. Procédé selon l'une quelconque des revendications précédentes, dans lequel ladite étape d'orientation et de mesure (10) précède une étape de perçage (20) pour obtenir des trous dans ladite roue (1) pour fixer la roue au véhicule, les surfaces (12) localisées sur le diamètre extérieur de la roue étant également obtenues par fraisage dans ladite phase de perçage (20), chacune de ces surfaces comprenant une première portion de surface (12a) s'étendant parallèlement audit plan médian (M) et une seconde portion (12b) centrée radialement par rapport à l'axe de roue principal (Zr), obtenus à partir des opérations de mesure et de calcul par interpolation de l'étape d'orientation et de mesure (10).

10. Procédé selon la revendication 9, dans lequel trois surfaces de contact de fixation (12) sont réalisées, espacées angulairement de 120° les unes des autres, la première et la seconde portions de surface (12a, 12b) de chacune desdites surfaces (12) étant étendue selon un angle droit par rapport à l'autre et constituant des points de contact de fixation respectifs pour le contact de moyen de centrage capable de centrer la roue (1) dans une étape de tournage (30) effectuée après l'étape de perçage (20).

11. Procédé selon la revendication 10, dans lequel lesdites surfaces localisées (12) sont réalisées dans la roue (1) dans une position à une distance angulaire de la position du trou de la valve prévu dans la roue.

12. Installation pour l'usinage de roues, en particulier pour percer et tourner des roues en alliage léger, comprenant des moyens pour orienter, mesurer et usiner, fonctionnant selon un procédé d'usinage selon l'une des revendications précédentes.
